# EUROPÄISCHE PATENTSCHRIFT

(11) **EP 0 803 194 B1**
(45) Veröffentlichungstag und Bekanntmachung des Hinweises auf die Patenterteilung: **21.07.1999**
(21) Anmeldenummer: 97106542.0
(22) Anmeldetag: 21.04.1997
(51) Int. Cl.: A22B 5/00, A22B 7/00

(54) **Verfahren und Vorrichtung zur Beseitigung von insbesondere mit dem BSE-Erreger infizierten Tieren**
Method and means for eliminating animals which are infected with the BSE causing agent
Procédé et dispositif pour éliminer des animaux infectés avec l'agent qui cause le BSE

(30) Priorität: 23.04.1996 DE 19616158
(43) Veröffentlichungstag der Anmeldung: 29.10.1997
(73) Patentinhaber: U.T.G. Gesellschaft für Umwelttechnik GmbH, 41747 Viersen (DE)
(72) Erfinder: Fuss, Hardy, 50226 Frechen (DE); Haak, Manfred, 41748 Viersen (DE); Jeschonek, Christian, 40822 Mettmann (DE); Tobeck, Volker, 47800 Krefeld (DE)
(74) Vertreter: Müller, Karl-Ernst, Dr., Dipl.-Ing.

(56) Entgegenhaltungen:
- EP-A- 0 525 696
- DE-A- 3 540 108
- US-A- 5 339 752

## Beschreibung

Die Erfindung betrifft ein Verfahren zur Beseitigung von insbesondere mit dem BSE-Erreger infizierten Tieren, wobei die Tiere getötet und die Tierkörper einer Weiterbehandlung unterzogen werden, sowie eine Vorrichtung zur Durchführung des Verfahrens.

Insbesondere nach dem Auftreten des BSE-Erregers stellt sich das Problem, wie die infizierten Tiere in großer Anzahl beseitigt werden können. Soweit dazu vorgeschlagen ist, die Tiere nach deren Tötung im Ganzen zu verbrennen, reichen die vorhandenen Verbrennungskapazitäten nicht aus, so daß die infizierten Tiere entsprechend lange am Leben gehalten werden müssen. Es ist weiterhin vorgeschlagen, die im Rahmen der Beseitigung der infizierten Tiere anfallenden Tierkörper in einer herkömmlichen Tierkörperverwertungsanstalt zu verarbeiten, in welcher die Tierkörper als Ganze zerkleinert und die zerkleinerten Massen thermisch behandelt werden, um Keime und Erreger abzutöten. Das als Tiermehl anfallende Verfahrensprodukt ist bei Befall mit dem BSE-Erreger einer gesonderten Vernichtung, insbesondere Verbrennung, zuzuführen. Auch bei dieser Verfahrensweise ergibt sich ein Kapazitätsproblem, da der Prozeß zwischen der Tötung der Tiere und der Tiermehlerfassung nicht aufteilbar ist. Ein weiterer Nachteil besteht darin, daß das anfallende Tiermehl nicht mit der erforderlichen Sicherheit von einer anschließenden wirtschaftlichen Verwertung ausgeschlossen werden kann.

Der Erfindung liegt daher die Aufgabe zugrunde, ein Verfahren zur Beseitigung von insbesondere mit dem BSE-Erreger infizierten Tieren anzugeben, welches einerseits eine wirtschaftliche Verwertung der Tierkörper ausschließt, und welches andererseits die Ausschöpfung von Kapazitätsreserven bei der Beseitigung ermöglicht.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in einer Ausgestaltung vor, daß die Tierkörper nach der Tötung über einer eingerichteten Auffangstrecke ausbluten und die aufgefangene Blutfraktion mit einem Vergällmittel und einem Färbemittel in einem Mischer vermischt und anschließend in einem Sammelbehälter zum Abtransport gesammelt wird, daß die ausgebluteten Tierkörper aufgebrochen, die Innereien entnommen, und die Innereien anschließend in einem Dissolver zerkleinert und mit einem zugeführten Vergällmittel und einem Färbemittel versetzt und anschließend in einem Sammelbehälter zum Abtransport gesammelt werden, und daß in die Tierkörper nach der Entnahme der Innereien über in den Tierkörper eingestochene Injektionslanzen ein Vergällmittel und ein Färbemittel derart eingepreßt wird, daß der Tierkörper vollständig mit den eingepreßten Mitteln durchsetzt ist, wonach die Tierkörper registriert und zum Abtransport bereitgehalten werden.

Danach zeichnet sich das erfindungsgemäße Verfahren zum einen dadurch aus, daß schon jeweils frühzeitig im Verfahrensablauf durch das Einbringen sowohl eines Vergällmittels als auch eines Färbemittels die wirtschaftliche Verwertung der Tierkörper bzw. der daraus anfallenden Zwischen- und Endprodukte sicher ausgeschlossen ist; zum anderen ist durch den zunächst erfolgenden Aufschluß in die Fraktionen Blut, Innereien und Tierkörper und die getrennte anschließende Behandlung der Fraktionen eine dem jeweiligen Massenanfall entsprechende Sammel- und Lagerkapazität zuzuordnen, wobei insbesondere bezüglich der Tierkörper eine Zwischenlagerung vor deren endgültiger Beseitigung möglich ist. Eine solche Zwischenlagerung kann beispielsweise in einem Kühlhaus erfolgen oder nach einer zwischenzeitlich erfolgenden Frostung.

Die endgültige Beseitigung der angefallenen Fraktionen geschieht vorzugsweise durch Verbrennung.

Nach einem Ausführungsbeispiel der Erfindung ist vorgesehen, daß die Tierkörper nach dem Einpressen von Vergällmittel und Färbemittel in einer Verpackungsstation vollständig in eine Schrumpffolie eingeschweißt werden; hiermit wird eine weitere Zwischenlagermöglichkeit geschaffen.

Nach Ausführungsbeispielen der Erfindung ist vorgesehen, daß als Vergällmittel Maschinenöl und als Färbemittel Kaliumpermanganat Verwendung finden; auch andere, entsprechend geeignete Substanzen sind einsetzbar.

Die Erfindung betrifft auch eine Vorrichtung zur Durchführung des Verfahrens, die auf das Einbringen des Vergällmittels und des Färbemittels in den festen Tierkörper gerichtet ist; hierzu ist ein geschlossenes Gehäuse zur Aufnahme des zu behandelnden Tierkörpers vorgesehen, wobei in den Wandungen des Gehäuses Zwangsführungen für die in den Tierkörper einzustechenden Injektionslanzen ausgebildet sind, und wobei die Injektionslanzen einen Innenkanal und davon radial abgehende und in der Wandung der Injektionslanzen ausgebildeten Bohrungen zum Durchtritt des einzupressenden Mittels aufweisen.

In einer weiteren Ausgestaltung sieht die Erfindung vor, daß die Tierkörper nach der Tötung in einer zweistufigen Shredderanlage zerkleinert werden und die Shreddermasse mit einem zugeführten Vergällmittel und einem Färbemittel versetzt und anschließend unter Druck und Temperatureinwirkung sterilisiert wird und daß die sterile Masse in parallel geschalteten Transportbahnen wahlweise in einem Trockner getrocknet oder einem Nassilo zugeführt und von hier aus abtransportiert wird, wobei die in dem Trockner entzogene Flüssigkeit über eine Leitung dem Nassilo zugeführt wird. Auch bei diesem Verfahren wird in vorteilhafter Weise frühzeitig dafür Sorge getragen, daß durch das Einbringen sowohl eines Vergällmittels als auch eines Färbemittels die wirtschaftliche Verwertung der Tierkörper beziehungsweise der daraus angefallenden Shreddermasse sicher ausgeschlossen ist.

In der Zeichnung sind Ausführungsbeispiele der Erfindung wiedergegeben, welche nachstehend beschrieben sind. Es zeigen:
- Fig. 1: den Verfahrensablauf eines erfindungsgemäßen Verfahrens in einem schematischen Flußdiagramm;
- Fig. 2: einen alternativen Verfahrensablauf in der Darstellung der Figur 1;
- Fig. 3: eine Anlage zur Durchführung des Verfahrens nach Figur 2 in einer Schemadarstellung.

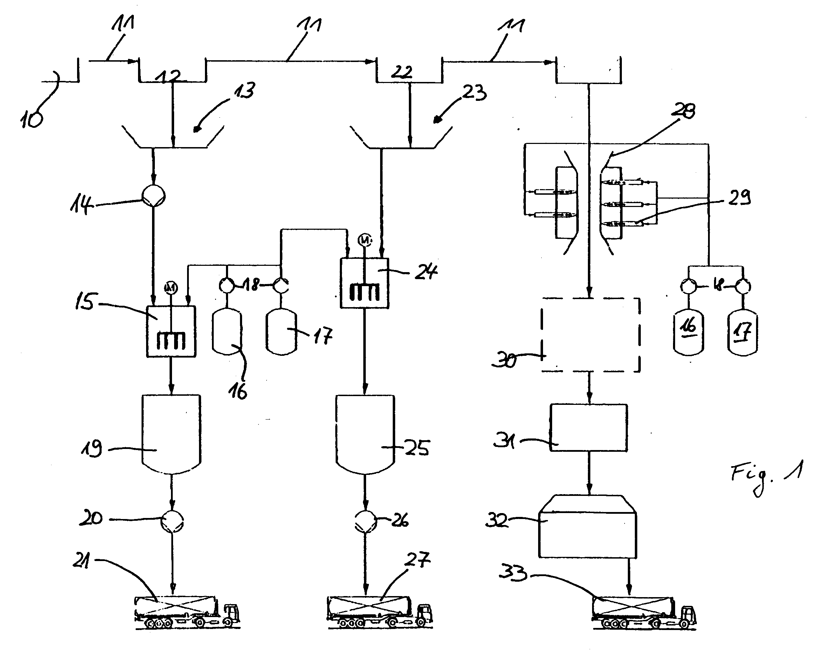

Nachdem die Tiere in einer Tötungsstation 10 in einer tierärztlich zugelassenen Art getötet worden sind, durchlaufen bei dem in Figur 1 dargestellten Ausführungsbeispiel die an Transportbahnen 11 bewegten Tierkörper zunächst eine Ausblutstation 12, wobei das abgehende Blut in einer Auffangrinne 13 aufgefangen und von einer Pumpe 14 in einen Mischer 15 gefördert wird; an den Mischer 15 sind ein Silo 16 für ein Vergällmittel, insbesondere Maschinenöl, und ein Silo 17 für ein Färbemittel, vorzugsweise Kaliumpermanganat, angeschlossen, wobei die Mittel jeweils über zugeordnete Pumpen 18 in den Mischer 15 gefördert werden; nach der Vermischung des Blutes mit Vergällmittel und Färbemittel wird die so behandelte Blutfraktion in ein Silo 19 als Auffangbehälter geleitet und hier zwischengelagert. Je nach Bedarf erfolgt ein Abtransport über ein Transportmittel 21, wobei die Blutfraktion aus dem Silo 19 über eine Pumpe 20 abgefördert wird.

Die ausgebluteten Tierkörper gelangen über die fortlaufende Transportbahn 11 in eine Aufbrechstation 22, in welcher die Tierkörper aufgebrochen und die Innereien entnommen werden; von einer Auffangwanne 23 gelangen die Innereien in eine als Dissolver ausgebildete Zerkleinerungs- und Mischvorrichtung 24, der über die Pumpen 18 ebenfalls aus dem Silo 16 bzw. dem Silo 17 das Vergällmittel bzw. das Färbemittel zugeführt wird, so daß in dem Dissolver 24 neben der Zerkleinerung der Innereien eine Vermischung mit den zugegebenen Mitteln erfolgt. Aus dem Dissolver 24 erfolgt ein Weitertransport in einen Silo 25, wobei je nach Mengenanfall eine Abförderung über ein Transportmittel 27 möglich ist, welches mittels der Pumpe 26 aus dem Silo 25 beladen wird.

Die ausgebluteten und von den Innereien befreiten Tierkörper werden in ein geschlossenes Gehäuse 28 eingebracht, in dessen Wandung Zwangsführungen für Injektionslanzen 29 ausgebildet sind; die Injektionslanzen werden in den Tierkörper eingestochen, und aus an die Injektionslanzen 29 angeschlossenen Silos 16, 17 für das Vergällmittel einerseits und das Färbemittel andererseits werden die Injektionslanzen gespeist, so daß unter Druck über die Injektionslanzen Vergällmittel und Färbemittel in den Tierkörper eingepreßt werden. Hierzu sind die Injektionslanzen an ihrer vorderen Einstichseite geschlossen und weisen ausgehend von einem Innenraum radial abgehende Bohrungen auf. Die Anzahl und Anordnung der Injektionslanzen 29 ist im einzelnen so bemessen, daß eine vollständige Durchsetzung des Tierkörpers mit Vergällmittel und Färbemittel gewährleistet ist, so daß auch eine stückweise wirtschaftliche Verwertung des Tierkörpers ausgeschlossen ist.

Nach der Behandlung in dem Gehäuse 28 gelangt bei dem dargestellten Ausführungsbeispiel der Tierkörper in eine Verpackungsstation 30, in welcher der Tierkörper in eine Schrumpffolie eingeschweißt wird; dieser Verfahrensschritt ist nicht zwangsweise erforderlich, vielmehr kann der Tierkörper auch unverpackt weitergefördert werden.

In jedem Fall durchläuft der Tierkörper eine Registrierstation 31, in welcher eine Registrierung und Kennzeichnung des Tierkörpers erfolgt, beispielsweise über einen aufgebrachten Barcodechip, damit gegebenenfalls der weitere Weg des Tierkörpers verfolgt werden kann. Von der Registrierstation 31 gelangt der Tierkörper in eine Sammelstelle 32, die beispielsweise als Kühlhaus ausgebildet sein kann. Von hier aus erfolgt fallweise der Abtransport über ein Transportmittel 32.

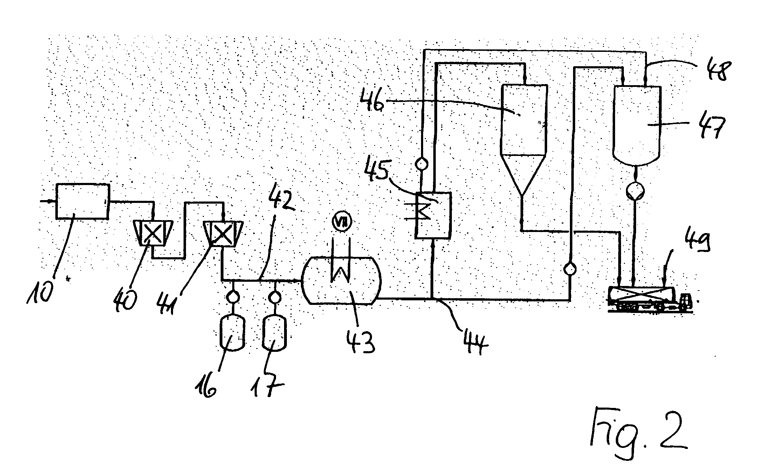

Bei dem in Figur 2 dargestellten Verfahrensablauf sind der Tötungsstation 10 in zweistufiger Anordnung Shredder 40, 41 nachgeschaltet, in denen die Tierkörper als ganze zerkleinert werden. Die in den Shreddern 40, 41 erzeugte Shreddermasse wird längs einer Transportstrecke 42 mit aus den Silos 16 beziehungsweise 17 zugeführtem Vergällmittel beziehungsweise Färbemittel versetzt und gelangt in eine Sterilisationsanlage 43. In dieser Sterilisationsanlage 43 wird die Shreddermasse mindestens 20 Minuten bei 3 bis 4 Bar Druck und einer Temperatureinwirkung von etwa 133° C sterilisiert, um die Abtötung von BSE-Erregern sicherzustellen. Das aus der Sterilisieranlage 43 abgeförderte Gut wird über eine Weiche 44 entweder in einen Trockner 45 verbracht und gelangt von hier aus in einen Trockensilo 46. Alternativ ist die Förderung des aus der Sterilisieranlage 43 stammenden Gutes über die Weiche 44 unmittelbar in ein Naßsilo 47 möglich. Die in dem Trockner 45 entzogene Flüssigkeit kann über eine Leitung 48 dem Naßsilo 47 zugeführt werden.

Aus dem Trockensilo 46 beziehungsweise dem Naßsilo 47 ist die Verbringung in ein Transportmittel 49 gegeben.

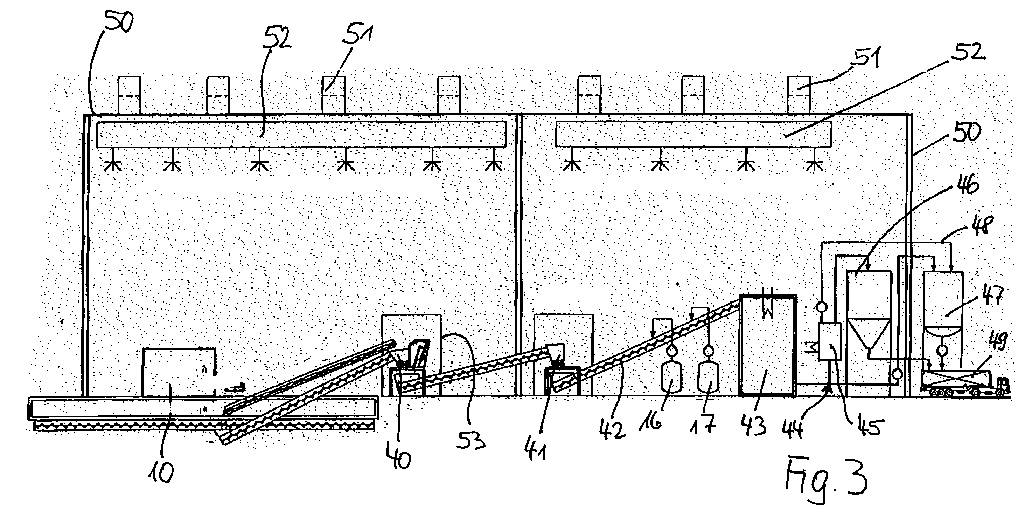

Das in Figur 3 dargestellte Ausführungsbeispiel verdeutlicht die maschinenmäßige Ausgestaltung des zu Figur 2 beschriebenen Verfahrensablaufes, wobei die Anlage in einem geschlossenen Gebäude 50 untergebracht ist, dessen Dachbereich mit Abluftfiltern 51 versehen ist, um sicherzustellen, daß nicht freigesetzte Erreger in die Atmosphäre gelangen. Im Dachbereich des Gebäudes 50 ist ferner eine Sprinkleranlage 52 integriert, die neben einer Feuerlöschfunktion auch das Verbringen von Desinfektionsmitteln erlaubt, wenn dies die Umstände innerhalb des Gebäudes 50 erfordern.

Es ist dargestellt, daß die beiden Shredder 40, 41 jeweils in sie einschließenden Einhausungen 43 untergebracht sind. Im übrigen ergibt sich die maschinelle Anordnung aus der Verfahrensbeschreibung zu dem in Figur 2 dargestellten Verfahren.

## Patentansprüche

1. Verfahren zur Beseitigung von insbesondere mit dem BSE-Erreger infizierten Tieren, wobei die Tiere getötet und die Tierkörper einer Weiterbehandlung unterzogen werden, dadurch gekennzeichnet, daß die Tierkörper nach der Tötung über einer eingerichteten Auffangstrecke (12, 13) ausbluten und die aufgefangene Blutfraktion mit einem Vergällmittel und einem Färbemittel in einem Mischer (15) vermischt und anschließend in einem Sammelbehälter (19) zum Abtransport gesammelt wird, daß die ausgebluteten Tierkörper aufgebrochen, die Innereien entnommen, und die Innereien anschließend in einem Dissolver (24) zerkleinert und mit einem zugeführten Vergällmittel und einem Färbemittel versetzt und anschließend in einem Sammelbehälter (25) zum Abtransport gesammelt werden, und daß in die Tierkörper nach der Entnahme der Innereien über in den Tierkörper eingestochene Injektionslanzen (29) ein Vergällmittel und ein Färbemittel derart eingepreßt wird, daß der Tierkörper vollständig mit den eingepreßten Mitteln durchsetzt ist, wonach die Tierkörper registriert und zum Abtransport bereitgehalten werden.

2. Verfahren nach Anspruch 1, dadurch gekennzeichnet, daß die Tierkörper nach dem Einpressen von Vergällmittel und Färbemittel in einer Verpackungsstation (30) vollständig in eine Schrumpffolie eingeschweißt werden.

3. Vorrichtung zur Durchführung des Verfahrens nach Anspruch 1 oder 2, dadurch gekennzeichnet, daß zum Einbringen des Vergällmittels und des Färbemittels in die Tierkörper ein geschlossenes Gehäuse (28) zur Aufnahme des zu behandelnden Tierkörpers vorgesehen ist und in den Wandungen des Gehäuses Zwangsführungen für die in den Tierkörper einzustechenden Injektionslanzen (29) ausgebildet sind, und daß die Injektionslanzen (29) einen Innenkanal und davon radial abgehende und in der Wandung der Injektionslanzen (29) ausgebildete Bohrungen zum Durchtritt des einzupressenden Mittels aufweisen.

4. Verfahren zur Beseitigung von insbesondere mit dem BSE-Erreger infizierten Tieren, wobei die Tiere getötet und die Tierkörper einer Weiterbehandlung unterzogen werden, dadurch gekennzeichnet, daß die Tierkörper nach der Tötung in einer zweistufigen Shredderanlage (40, 41) zerkleinert werden und die Shreddermasse mit einem zugeführten Vergällmittel und einem Färbemittel versetzt und anschließend unter Druck und Temperatureinwirkung sterilisiert wird und daß die sterile Masse in parallel geschalteten Transportbahnen wahlweise in einem Trockner (45) getrocknet oder einem Naßsilo (47) zugeführt und von hier aus abtransportiert wird, wobei die in dem Trockner (45) entzogene Flüssigkeit über eine Leitung (48) dem Nassilo (47) zugeführt wird.

5. Verfahren nach Anspruch 4, dadurch gekennzeichnet, daß die Sterilisation der Shreddermasse über einen Zeitraum von wenigstens 20 Minuten bei einem Druck von 3 bis 4 Bar und bei einer Temperatur von mehr als 130° C erfolgt.

6. Verfahren nach einem der Ansprüche 1 oder 2 oder 4 oder 5, dadurch gekennzeichnet, daß als Vergällmittel Maschinenöl verwendet wird.

7. Verfahren nach einem der Ansprüche 1 oder 2 oder 4 bis 6, dadurch gekennzeichnet, daß als Färbemittel Kaliumpermanganat verwendet wird.

## Claims

1. Process for the disposal of animals, in particular of animals infected with the BSE virus, wherein the animals are killed and the carcasses are subjected to a further treatment, characterised in that, after the animals have been killed, the carcasses bleed over an adapted catching section (12, 13) and the blood fraction that is caught is mixed with a denaturing agent and a colouring agent in a mixer (15) and subsequently collected in a collecting tank (19) with a view to being transported away, in that the bled carcasses are broken open, the innards are taken out, and the innards are subsequently crushed in a dissolver (24) and mixed with a supplied denaturing agent and a colouring agent and subsequently collected in a collecting tank (25) with a view to being transported away, and in that after the innards have been extracted a denaturing agent and a colouring agent are injected into the carcasses in such a way via injection lances (29) which are inserted into the carcass that the carcass is totally permeated by the injected agents, after which the carcasses are recorded and held ready to be transported away.

2. Process according to Claim 1, characterised in that after the injection of denaturing agent and colouring agent the carcasses are totally heat-sealed within a shrink-on film in a packing station (30).

3. Device for implementing the process according to Claim 1 or 2, characterised in that with a view to introducing the denaturing agent and the colouring agent into the carcasses a closed housing (28) is provided for receiving the carcass to be treated and constraining guides for the injection lances (29) to be inserted into the carcass are formed in the walls of the housing, and in that the injection lances (29) comprise an inner channel and bores for the passage of the agent to be injected which emanate radially from said channel and are formed in the wall of the injection lances (29).

4. Process for the disposal of animals, in particular of animals infected with the BSE virus, wherein the animals are killed and the carcasses are subjected to a further treatment, characterised in that, after the animals have been killed, the carcasses are crushed in a two-stage shredder plant (40, 41) and the shredded mass is mixed with a supplied denaturing agent and a colouring agent and subsequently sterilised under pressure and the influence of temperature and in that, in transport paths connected in parallel, the sterile mass is optionally dried in a drier (45) or supplied to a wet silo (47) and transported away from here, whereby the liquid which is extracted in the drier (45) is supplied to the wet silo (47) via a pipe (48).

5. Process according to Claim 4, characterised in that the sterilisation of the shredded mass takes place over a period of at least 20 minutes at a pressure of 3 to 4 bar and at a temperature of more than 130° C.

6. Process according to one of Claims 1 or 2 or 4 or 5, characterised in that machine oil is used by way of denaturing agent.

7. Process according to one of Claims 1 or 2 or 4 to 6, characterised in that potassium permanganate is used by way of colouring agent.

## Revendications

1. Procédé pour la mise à l'écart d'animaux infectés en particulier par l'agent de l'encéphalite bovine spongiforme, les animaux étant abattus et leurs carcasses étant soumises à un traitement ultérieur, caractérisé en ce qu'après la mise à mort, les carcasses des animaux se vident de leur sang au-dessus d'une ligne collectrice aménagée (12, 13) et que la fraction de sang recueillie est mélangée dans un mélangeur (15) avec un produit dénaturant et un produit colorant puis collectée dans un récipient collecteur (19) pour son évacuation, en ce que les carcasses des animaux vidées de leur sang sont ouvertes, que les entrailles sont extraites et que celles-ci sont ensuite déchiquetées et se voient ajouter un produit dénaturant et un produit colorant dans un dispositif de dissolution (24) puis sont collectées dans un récipient collecteur (25) pour leur évacuation, et en ce qu'après l'enlèvement des entrailles, un produit dénaturant et un produit colorant sont injectés dans les carcasses des animaux, au moyen de lances d'injection (29) enfoncées dans les carcasses de telle manière que celles-ci soient entièrement imprégnées par les produits injectés, les carcasses des animaux étant ensuite enregistrées et tenues prêtes à l'évacuation.

2. Procédé selon la revendication 1, caractérisé en ce qu'après l'injection de produits dénaturants et de produits colorants, les carcasses des animaux sont entièrement enveloppées dans une feuille thermorétractable soudée dans une station d'emballage (30).

3. Dispositif pour la réalisation du procédé selon la revendication 1 ou 2, caractérisé en ce que pour l'introduction du produit dénaturant et du produit colorant dans les carcasses des animaux, un caisson fermé (28) est prévu pour recevoir les carcasses des animaux à traiter, et en ce que des conduites forcées pour les lances d'injection (29) à enfoncer dans les carcasses des animaux sont réalisées dans les parois du caisson, et en ce que les lances d'injection (29) sont munies d'un canal intérieur et d'ouvertures partant dans le sens radial de ce canal et pratiquées dans la paroi des lances d'injection (29) pour le passage du produit à injecter.

4. Procédé pour la mise à l'écart d'animaux infectés en particulier par l'agent de l'encéphalite bovine spongiforme, les animaux étant abattus et leurs carcasses étant soumises à un traitement ultérieur, caractérisé en ce qu'après la mise à mort, les carcasses des animaux sont déchiquetées dans une installation de déchiquetage à deux étages (40, 41) et en ce que la masse déchiquetée se voit ajouter un produit dénaturant et un produit colorant et qu'elle est ensuite stérilisée par effet de pression et de température et en ce que, par l'intermédiaire de bandes de transport disposées en parallèle, la masse stérile est au choix séchée dans un sécheur (45) ou amenée dans un silo humide (47) pour être évacuée à partir de là, le liquide retiré dans le sécheur (45) étant amené au silo humide (47) par l'intermédiaire d'une conduite (48).

5. Procédé selon la revendication 4, caractérisé en ce que la stérilisation de la masse déchiquetée a lieu durant une période d'au moins 20 minutes sous une pression de 3 à 6 bars et à une température de plus de 130°C.

6. Procédé selon l'une des revendications 1 ou 2 ou 4 ou 5, caractérisé en ce que l'on utilise de l'huile pour machines comme produit dénaturant.

7. Procédé selon l'une des revendications 1 ou 2 ou 4 à 6, caractérisé en ce que l'on utilise du permanganate de potassium comme colorant.
